# EUROPÄISCHE PATENTANMELDUNG

(11) **EP 0 660 636 A1**
(43) Veröffentlichungstag der Anmeldung: **28.06.1995**
(21) Anmeldenummer: 93120556.1
(22) Anmeldetag: 20.12.1993
(51) Int. Cl.: H04Q 11/00

(54) **Anordnung und Verfahren zur Durchschaltung von optischen Signalen unter Verwendung nur einer Verzögerungsleitung**

(71) Anmelder: SIEMENS AKTIENGESELLSCHAFT, D-80333 München (DE)
(72) Erfinder: Osborne, Robert, Dr., D-81371 München (DE)

(57) **Zusammenfassung**

Eine Anordnung zur Durchschaltung von im Zuge eines asynchronen Übertragungsverfahrens (Asynchronous Transfer Mode)als optisches Signal auf Eingangswellenleitern herangeführten Datenblöcken (Nachrichtenzellen) fester Länge weist eingangswellenleiterindividuelle Wellenlängenumsetzeinrichtungen auf. Die Wellenlängenumsetzeinrichtungen sind über nur eine wellenlängenselektive Verzögerungsleitung und einen Wellenlängendemultiplexer mit den Ausgangswellenleitern verbunden. Unterschiedliche Verfahren zur Durchschaltung der Datenblöcke sind gegeben bei wechselweisem Einsatz von Verzögerungsleitung bzw. Wellenlängendemultiplexer einerseits und Durchlaßverhalten für periodische Wellenlängen bzw. Durchlaßverhalten für zusammenhängende Bereiche von Wellenlängen andererseits.

## Beschreibung

Daten und somit auch Datenblöcke fester Länge,wie z.B. nach dem ATM(Asynchronous-Transfer-Mode)-Verfahren übertragene Nachrichtenzellen, werden aufgrund der mit der Übertragung als optisches Signal verbundenen Vorteile zunehmend über optische Signale führende Wellenleiter übertragen.Neuere Entwicklungen haben auch in den Knotenpunkten der Übertragungsstrecken eine Durchschaltung von Datenblöcken unter Vermeidung einer Umsetzung in ein elektrisches Signal zum Ziel.

Die Erfindung betrifft eine Anordnung zur Durchschaltung von als optische Signale auf Eingangswellenleitern übertragenen Datenblöcken fester Länge auf Ausgangswellenleiter,bei der
- die Eingangswellenleiter jeweils mit einer Wellenlängenumsetzeinrichtung verbunden sind
- die Wellenlängenumsetzeinrichtungen nach Maßgabe einer Zielinformation,die in einem auf dem zugehörigen Eingangswellenleiter ankommenden Datenblock mitgeführt ist,über eine Steuerugseinrichtung einstellbar sind
- die Eingangswellenleiter über jeweils ein Signal einer gegebenen Wellenlänge transportierende Verbindungswege mit den Ausgangswellenleitern verbindbar sind
- in einer Verzögerungsleitung die Datenblöcke in einem Mehrfachen der gesamten Übertragungsdauer eines Datenblockes entsprechenden Stufen verzögerbar sind.

Aus Photonic Switching II, Proceedings of the International Topical Meeting, Kobe, Japan, 12. bis 14. April 1990, Springer Verlag, Seiten 296 bis 299, "Photonic ATM Switching Network" von S. Kuroyanagi, T. Shimoe und K. Murakami ist eine Anordnung zur Durchschaltung von als optische Signale auf Eingangswellenleitern übertragenen Datenblöcken fester Länge auf Ausgangswellenleiter bekannt, bei der ein auf einer Eingangsleitung ankommender Datenblock in einer eingangsleitungsindividuellen Wellenlängenumsetzeinrichtung in eine Wellenlänge umgesetzt wird, nach deren Maßgabe der Datenblock zu dem betreffenden Ausgang durchgeschaltet wird. Bei dieser Anordnung sind ausgangsindividuelle Verzögerungseinrichtungen vorgesehen. In einer Verzögerungseinrichtung wird ein optisches Signal unter Verwendung eines Wellenlängen-Umsetzungs-Lasers in eine der erforderlichen Verzögerung entsprechenden Wellenlänge umgesetzt. Dieses optische Signal wird über eine passive optische Verteileinrichtung (Splitter) einer Mehrzahl von Filtern mit untereinander unterschiedlichen, festgelegten Wellenlängen-Durchlaßbereichen zugeführt. Eine Verzögerungskette ist mit einer der Mehrzahl von Filtern gleichenden Anzahl von Kettengliedern gebildet. Die Kettenglieder sind jeweils wiederum mit einer Verzögerungsleitung und einer Einkoppeleinrichtung gebildet. Die Filter sind ausgangsseitig jeweils mit einer Einkoppeleinrichtung verbunden. Das optische Signal durchläuft nach Maßgabe der jeweiligen Wellenlänge eine jeweilige Anzahl von Kettengliedern. Über die Wellenlängen des optischen Signals sind also verschiedene Stufen von Verzögerungsdauern wählbar.

Bei dieser Anordnung macht es sich nachteilig bemerkbar, daß zum einen im Durchschalteweg für ein Signal zwei Wellenlängenumsetzeinrichtungen erforderlich sind und zum anderen in den Verzögerungseinrichtungen durch die Aufsplitterung des Signals und die Mehrzahl zu durchlaufender Einfügestellen ein relativ hoher Intensitätsverlust eintritt, wobei optische Signale mit einer höheren Verzögerungsdauer eine entsprechend erhöhte Anzahl von Einfügestellen zu durchlaufen haben und damit einen entsprechend erhöhten Intensitätsverlust erfahren.

Der Erfindung liegt das Problem zugrunde, eine Anordnung zur Durchschaltung von als optische Signale auf Eingangswellenleitern übertragenen Datenblöcken fester Länge auf Ausgangswellenleiter anzugeben, die bei einer Durchschaltung eines Datenblockes eine nur einmalige Umsetzung der Wellenlänge erfordert und die des weiteren einen reduzierten Bereich der Intensitäten der optischen Signale an den Ausgängen der Anordnung aufweist.

Das Problem wird bei dem oben umrissenen Gegenstand dadurch gelöst,daß
- die Ausgänge der Wellenlängenumsetzeinrichtungen mit dem Eingang einer wellenlängenselektiven Verzögerungsleitung verbunden sind, die mit den Verzögerungsstufen entprechend beabstandeten Reflexionsschichten versehen ist
- der Ausgang der Verzögerungsleitung über einen Wellenlängendemultiplexer mit den Ausgangswellenleitern verbunden ist.

Die anmeldungsgemäße Anordnung bringt neben dem Vorteil eines geringen Aufwandes für nur eine im Durchschalteweg eines Datenblockes vorzusehende Wellenlängenumsetzeinrichtung und für nur eine sämtlichen Eingangs- und Ausgangswellenleitern gemeinsame Verzögerungsleitung den weiteren Vorteil mit sich, daß für die Weiterverarbeitung der Signale an den Ausgängen der Anordnung jeweils Einrichtungen einsetzbar sind,die lediglich ihnen eingangsseitig zugeführte Signale mit einenm eingeschränkten Dynamikbereich verarbeiten können.

Gemäß eines ersten vorteilhaften Wellenlängen-Belegungsschemas weisen die Reflexionsschichten der Verzögerungsleitung jeweils Reflexionsverhalten für Vielfache einer zugehörigen Wellenlänge und der Wellenlängendemultiplexer für jeden Ausgangswellenleiter ein Durchlaßverhalten für einen zusammenhängenden Bereich von Wellenlängen auf.

Gemäß eines zweiten vorteilhaften Wellenlängen-Belegungsschemas weisen die Reflexionsschichten der Verzögerungsleitung jeweils ein Reflexionsverhalten für einen zusammenhängenden Bereich von Wellenlängen und der Wellenlängendemultiplexer für jeden Ausgangswellenleiter ein Durchlaßverhalten für Vielfache einer zugehörigen Wellenlänge auf.

Weitere vorteilhafte Weiterbildungen betreffen Verfahren zum Betrieb der Anordnung.

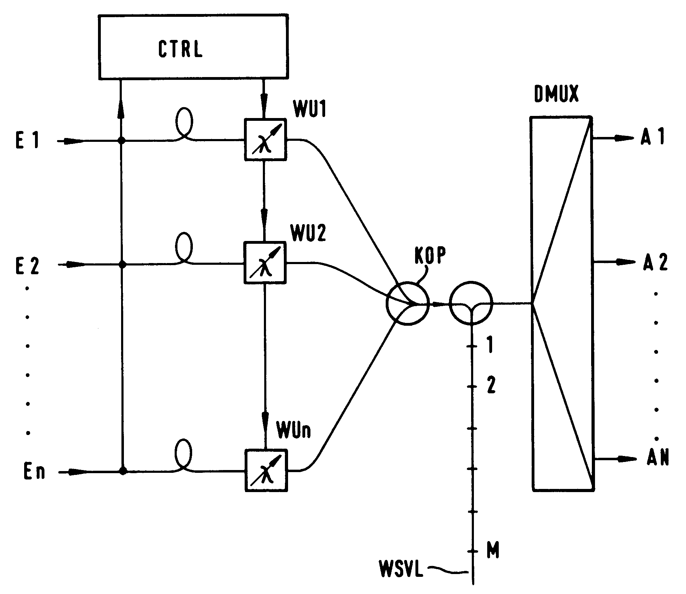

Die Erfindung wird nun als Ausführungsbeispiel in einem zum Verständnis erforderlichen Umfang anhand einer Figur näher erläutert. Die Figur zeigt eine erfindungsgemäße Anordnung zur Durchschaltung von auf Eingangswellenleitern E1..En herangeführten Datenblöcken auf Ausgangswellenleiter A1..AN. Die Datenblöcke mögen durch nach einem asynchronen Übertragungsverfahren, zum Beispiel dem ATM (Asynchronous Transfer Mode)-Verfahren übertragene Nachrichtenzellen fester Länge gegeben sein.Die Nachrichtenzellen weisen jeweils einen Nutzdatenteil mit beispielsweise 48 byte Länge und einen diesem vorangestellten Nachrichtenzellenkopf mit beispielsweise 5 byte Länge auf Der Nachrichtenzellenkopf umfaßt eine Zielinformation(Virtual Path Identifier/Virtual Channel Identifier).Die Eingangswellenleiter, die durch optische Signale weiterleitende Glasfaserleitungen gegeben sein mögen, sind über zugehörige Wellenlängenumsetzeinrichtungen WU1..WUn mit den Eingängen eines herkömmlichen, optische Signale zusammenführenden Kopplers KOP verbunden. Die Wellenlängenumsetzeinrichtungen können beispielsweise durch aus Electronics Letters, vol. 23, pages 1088..1089, 1987, "Tuneable Optical Conversion Using a Multi Electrode Distributed Feedback Laser Diode with a Saturable Absorber" oder aus Proceedings Fourth Photonic Switching Topical Meeting, Salt Lake City, March 1991, Paper WA2 bekannte, stromgesteuerte DFB (Distributed Feed-Back) Laser Dioden gegeben sein. Diese Laser Dioden vermögen - unter der Voraussetzung eines eingangsseitig zugeführten optischen Signals mit einer vorgegebenen Mindestintensität - in Abhängigkeit von der von einer steuerbaren Stromquelle zugeführten Stärke des steuernden Stromes am Ausgang ein optisches Signal mit einer aus einer Mehrzahl von möglichen Wellenlängen abzugeben.

Der Ausgang des Kopplers ist mit den Eingängen einer wellenlängenselektiven Verzögerungsleitung verbunden. Die Verzögerungsleitung kann beispielsweise durch eine aus Electronics Letters, 7th January 1993, vol. 29, no. 1, pages 28,29 "High Reflectivity and Narrow Bandwidth Fiber Gratings Written by a Single Eximer Pulse" oder aus Electronics Letters, 18th March 1993, vol. 29, no. 6, pages 566..568 "Production of in-fiber gratings using a defractive optical element" bekannte Verzögerungsleitungen gegeben sein. In der Verzögerungsleitung sind an den mit 1..M bezeichneten Stellen wellenlängenselektive Reflektionsschichten mit jeweils unterschiedlicher charakteristischer Wellenlänge eingebracht. Die wellenlängenselektiven Reflektionsschichten vermögen jeweils ein optisches Signal mit einer ihnen zugeordneten Wellenlänge zu reflektieren. Der Abstand zweier benachbarter Reflektionsschichten ist derart bemessen, daß der Laufzeitunterschied eines optischen Signales dem zeitlichen Abstand des Auftretens zweier aufeinanderfolgender Datenblöcke bzw. der gesamten Übertragungsdauer eines Datenblockes bei der gegebenen Datenübertragungsrate entspricht. Die Verzögerungsleitung ist über eine herkömmliche Verzweigungseinrichtung mit dem Eingang eines Wellenlängendemultiplexers DMUX verbunden. Die Ausgänge des Wellenlängendemultiplexers sind mit den Ausgangswellenleitern verbunden, die optische Signale mit den zugehörigen Wellenlängen führen.

Im übrigen sind die Eingangswellenleiter mit einer Steuerungseinrichtung CTRL verbunden, die ihrerseits mit den Wellenlängenumsetzeinrichtungen verbunden ist. Die Zielinformationen von auf den Eingangswellenleitern ankommenden Datenblöcken werden der Steuerungseinrichtung zugeführt. In der Steuerungseinrichtung wird für jeden ankommenden Datenblock nach Maßgabe der zugehörigen Zielinformation in an sich bekannter Weise, z.B. unter Verwendung einer Umwertetabelle, der gewünschte Ausgangswellenleiter ermittelt.

Zur Durchschaltung von Datenblöcken von den Eingangswellenleitern zu den jeweiligen Ausgangswellenleitern sind zwei unterschiedliche Konfigurationen gegeben. Bei der ersten Konfiguration weisen die Reflektionsschichten in der Verzögerungsleitung jeweils Reflektionsverhalten für periodische Wellenlängen auf, wobei der Wellenlängendemultiplexer optische Signale mit einem zusammenhängenden Bereich von Wellenlängen jeweils einem Ausgang zuführt. Dabei ergibt sich das in Tabelle 1 dargestellte Wellenlängenbelegungsschema.

**Tabelle 1**

| | | | |
|---|---|---|---|
| Ausgangswellenleiter | A1 | A2 | AN |
| Reflektionsschicht | 1 2 3 ... M | 1 2 3 ... M | 1 2 3 ... M |
| λ (KANAL NR.) | 1 2 3 ... M | M+1 ..... 2M | ... MN |

Soll also beispielsweise ein ankommender Datenblock auf den Ausgangswellenleiter A1 weitergeleitet werden, so veranlaßt die Steuerungseinrichtung die zugehörige Wellenlängenumsetzeinrichtung den Datenblock mit einer der Wellenlänge 1,2..M weiterzuleiten. Welche von diesen Wellenlängen ausgewählt wird ergibt sich aus der erforderlichen Verzögerungsdauer für diesen Datenblock. Auf den Ausgangswellenleitern werden während der Übertragungsdauer eines Datenblockes jeweils nur ein Datenblock übertragen. Zur Vermeidung von Kollisionen von auf unterschiedlichen Eingangswellenleitern ankommenden Datenblöcken mit Datenblöcken,die auf denselben Ausgangswellenleiter weitergeleitet werden sollen, ist es erforderlich, einzelne Datenblöcke zu verzögern. Dazu wird in der Steuerungseinrichtung für jeden Ausgangswellenleiter eine Tabelle vorgehalten, die in an sich bekannter Weise mit einem FIFO-Speicher gebildet sein kann. In einem FIFO-Speicher wird mit jedem auf den zugehörigen Ausgangswellenleiter durchzuschaltenden Datenblock ein Speicherplatz besetzt und nach jeder Übertragungsdauer eines Datenblocks der Speicherplatz mit dem jeweils ältesten Eintrag gelöscht. Für einen Datenblock ergibt sich also die erforderliche Verzögerungsdauer unter Berücksichtigung von anderen Datenblöcken, die priorisiert auf denselben Ausgangswellenleiter durchgeschaltet werden. Vorzugsweise wird eine möglichst kurze Verzögerungsdauer ausgewählt.

Bei der zweiten Konfiguration weisen die Reflexionsschichten jeweils Reflexionsverhalten für einen zusammenhängenden Bereich von Wellenlängen auf, wobei der Wellenlängendemultiplexer den Ausgangsleitungen optische Signale zuführt, die ein Vielfaches (m= 1,2,3...) der zugehörigen Wellenlänge aufweisen. Für die zweite Konfiguration ergibt sich das in Tabelle 2 dargestellte Wellenbelegungsschema.

| | | | |
|---|---|---|---|
| Ausgangswellenleiter | A1,A2,...AN | A1,A2,...AN | A1,A2,...AN |
| Reflektionsschicht | 1 | 2 | M |
| λ (KANAL NR.) | 1 2 3 ... N | N+1 ..... 2N | MN |

Soll also beispielsweise ein Datenblock auf den Ausgangswellenleiter A1 weitergeleitet werden, wobei eine Verzögerung an der Reflektionsschicht 2 erforderlich ist, so veranlaßt die Steuerung die Weiterleitung dieses Datenblocks mit einer der Kanal Nr. N+1 entsprechenden Wellenlänge. Die für die erste Konfiguration gemachten Aussagen bezüglich der erforderlichen Verzögerungsdauer gelten sinngemäß für die zweite Konfiguration.

Für die Ermittlung und Einstellung der erforderlichen Wellenlänge für die Weiterleitung eines ankommenden Datenblocks ist eine gewisse Zeitspanne erforderlich. Es ist eine im Bereich fachmännischen Könnens liegende Maßnahme, zwischen den Stellen, an denen die Zielinformationen von den Eingangsleitungen abgegriffen wird und den Eingängen der Wellenlängenumsetzeinrichtungen in der Zeichnung nicht dargestellte Verzögerungsleitungen einzufügen, die eine ausreichende Verzögerungsdauer für die Einstellung der Wellenlängenumsetzeinrichtungen bis zum Eintreffen der Datenblöcke an den Eingängen der Wellenlängenumsetzeinrichtungen sicherstellen.

Im übrigen können in die Ausgangwellenleiter jeweils Wellenlängenumsetzeinrichtungen eingefügt sein, die beispielsweise durch optische Inverter gegeben sein mögen. Als optische Inverter können beispielsweise solche zum Einsatz kommen, wie sie in B. Glans, J. Wiesenfeld "Optical Wave Length Shifter for Wave Length-Division-Multiplexed Networks", Optics and Photonics News, Dec. 1992, S. 31 bekannt sind. Die optischen Inverter bewirken jeweils zum einen eine Umsetzung sämtlicher Datenblöcke mit unterschiedlichen Wellenlängen in Datenblöcke mit einer einzigen Wellenlänge und zum anderen einen untereinander gleich hohen Intensitätspegel der weitergeleiteten Datenblöcke.

## Patentansprüche

1. Anordnung zur Durchschaltung von als optische Signale auf Eingangswellenleitern (E1..En) übertragenen Datenblöcken fester Länge auf Ausgangswellenleiter (A1..AN),bei der
- die Eingangswellenleiter jeweils mit einer Wellenlängenumsetzeinrichtung (WU1..WUn) verbunden sind
- die Wellenlängenumsetzeinrichtungen nach Maßgabe einer Zielinformation,die in einem auf dem zugehörigen Eingangswellenleiter ankommenden Datenblock mitgeführt ist,über eine Steuerungseinrichtung (CTRL) einstellbar sind
- die Eingangswellenleiter über jeweils ein Signal einer gegebenen Wellenlänge transportierende Verbindungswege mit den Ausgängen der Anordnung verbindbar sind
- in einer Verzögerungsleitung (WSVL) die Datenblöcke in einem Mehrfachen der gesamten Übertragungsdauer eines Datenblockes entsprechenden Stufen verzögerbar sind
**dadurch gekennzeichnet,daß**
- die Ausgänge der Wellenlängenumsetzeinrichtungen mit dem Eingang einer wellenlängenselektiven Verzögerungsleitung verbunden sind,die mit den Verzögerungsstufen entsprechend beabstandeten Reflektionsschichten versehen ist
- der Ausgang der Verzögerungsleitung über einen Wellenlängendemultiplexer (DEMUX) mit den Ausgangswellenleitern verbunden ist.

2. Anordnung nach Anspruch 1,
**dadurch gekennzeichnet,daß**
- die Wellenlängenumsetzeinrichtungen über einen Koppler(KOP) mit der Verzögerungsleitung verbunden sind.

3. Anordnung nach einem der Ansprüche 1 oder 2,dadurch gekennzeichnet,daß
- die Reflektionsschichten der Verzögerungsleitung jeweils Reflektionsverhalten für Vielfache einer zugehörigen Wellenlänge und der Wellenlängendemultiplexer für jeden Ausgangswellenleiter ein Durchlaßverhalten für einen zusammenhängenden Bereich von Wellenlängen aufweisen.

4. Anordnung nach einem der Ansprüche 1 oder 2,
**dadurch gekennzeichnet,daß**
- die Reflektionsschichten der Verzögerungsleitung jeweils ein Reflektionsverhalten für einen zusammenhängenden Bereich von Wellenlängen und der Wellenlängendemultiplexer für jeden Ausgangswellenleiter ein Durchlaßverhalten für Vielfache einer zugehörigen Wellenlänge aufweisen.

5. Verfahren zum Betrieb einer Anordnung nach einem der vorstehenden Ansprüche,
**dadurch gekennzeichnet,daß**
- eine Zielinformation,die in einem auf einem Eingangswellenleiter ankommenden Datenblock mitgeführt ist,der Steuerungseinrichtung zugeführt wird
- für den ankommenden Datenblock nach Maßgabe des gewünschten Ausgangswellenleiters und der erforderlichen Verzögerungsdauer eine Wellenlänge ermittelt wird,
- der ankommende Datenblock in der zugehörigen Wellenlängenumsetzeinrichtung in die für ihn ermittelte Wellenlänge umgesetzt,nach Maßgabe seiner Wellenlänge in der Verzögerungsleitung verzögert und über den Wellenlängendemultiplexer auf den gewünschten Ausgangswellenleiter durchgeschaltet wird.

6. Verfahren nach Anspruch 5,
**dadurch gekennzeichnet,daß**
- der Datenblock um eine Anzahl von Stufen verzögert wird,die ein gleichzeitiges Auftreten mit einem anderen,auf denselben Ausgangswellenleiter weiterzuleitenden Datenblock vermeidet.

7. Verfahren nach Anspruch 6,
**dadurch gekennzeichnet,daß**
- der Datenblock um eine geringstmögliche Anzahl von Stufen verzögert wird.

8. Anordnung bzw. Verfahren nach einem der vorstehenden Ansprüche,
**dadurch gekennzeichnet,daß**
- die Datenblöcke durch nach einem asynchronen Übertragungsverfahren übertragene Nachrichtenzellen gegeben sind.
